# EUROPEAN PATENT APPLICATION

(11) **EP 4 693 284 A1**
(43) Date of publication of application: **11.02.2026**
(21) Application number: 25189004.2
(22) Date of filing: 11.07.2025
(51) Int. Cl.: G10L 25/48, G10L 25/63, G10L 17/26, G10L 25/60, G06V 40/16, G10L 25/51

(54) **SYSTEM AND METHOD FOR DETECTING ARTIFICIAL ENTRAINMENT**

(30) Priority: 05.08.2024 US 202418794539
(71) Applicant: Honeywell International Inc., Charlotte, NC 28202 (US)
(72) Inventor: LUBOLD, Nichola, Charlotte, 28202 (US); FINSETH, Tor, Charlotte, 28202 (US); DE MERS, Robert, Charlotte, 28202 (US)
(74) Representative: Ingrassia, Fisher & Lorenz UK Ltd.

(57) **Abstract**

A system and method for detecting artificial entrainment includes processing first audio signals to extract a plurality of first speech-related features and a plurality of first lexical-related features from the first audio signals supplied from a first user, and processing second audio signals to extract a plurality of second speech-related features and a plurality of second lexical-related features from the second audio signals supplied from a remote source. The first and second speech-related features are processed to determine when the first user and the remote source begin to exhibit vocal entrainment. The first and second lexical-related features are processed to determine when the first user and the remote source begin to exhibit lexical entrainment. A determination is made, using a plurality of algorithms, metrics, and features implemented in the processing system, as to when the vocal entrainment and or the lexical entrainment exhibits artificial speech entrainment.

## Description

### TECHNICAL FIELD

The present disclosure relates to a system and method for detecting entrainment, and more particularly to a system and method for detecting artificial entrainment.

### BACKGROUND

Entrainment is a form of adaptive alignment where communicators, both artificial and biological, align verbal, lexical, physical, and neurological behaviors to their conversational partner. This entrainment, also known as vocal entrainment or speech entrainment, can facilitate conversational success or, in rare cases, harm conversational success. Research has shown that positive adaptive alignment is important to social and cognitive outcomes, including rapport, trust, and conversational success. Indeed, it is theorized that highly entrained conversational partners can theoretically attain greater success because they have entered a coordination rhythm supportive of mutual understanding. Research has also shown that speech entrainment can be used to disrupt collaboration and communication. Although the context for this is more limited, it can, in many instances, result in an undesirable, and potentially disruptive, outcome.

In either context, speech entrainment is typically a natural phenomenon. It is known, however, that speech entrainment can also be artificially implemented. That is, artificial speech entrainment is the purposeful manipulation of the speech supplied from a first party to either increase rapport with a second party, decrease rapport with the second party, or keep rapport with the second party neutral. Having the ability to determine when speech entrainment is being used to artificially and purposefully manipulate speech is highly desirable.

Hence, there is a need for a system and method that can detect when speech entrainment is being utilized and synthesized in an interaction. More specifically, a system and method for detecting artificial entrainment. This present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a system for detecting artificial entrainment includes a processing system that is configured to: extract a plurality of first speech-related features and a plurality of first lexical-related features from first audio signals generated in response to speech supplied from a first user; extract a plurality of second speech-related features and a plurality of second lexical-related features from second audio signals generated in response to speech supplied from a remote source; process the first and second speech-related features to determine when the first user and the remote source begin to exhibit vocal entrainment; process the first and second lexical-related features to determine when the first user and the remote source begin to exhibit lexical entrainment; and determine, using a plurality of algorithms, metrics, and features, when the vocal entrainment and or the lexical entrainment exhibits artificial speech entrainment. Artificial speech entrainment is defined as purposeful manipulation of the speech supplied from the remote source to increase rapport with the first user, decrease rapport with the first user, or keep rapport with the first user neutral.

In another embodiment, a method for detecting artificial entrainment includes processing, in a processing system, first audio signals to extract a plurality of first speech-related features and a plurality of first lexical-related features from the first audio signals, the first audio signals generated in response to speech supplied from a first user, and processing, in the processing system, second audio signals to extract a plurality of second speech-related features and a plurality of second lexical-related features from the second audio signals, the second audio signals generated in response to speech supplied from a remote source. The first and second speech-related features are processed, in the processing system, to determine when the first user and the remote source begin to exhibit vocal entrainment. The first and second lexical-related features are processed, in the processing system, to determine when the first user and the remote source begin to exhibit lexical entrainment. A determination is made, using a plurality of algorithms, metrics, and features implemented in the processing system, as to when the vocal entrainment and or the lexical entrainment exhibits artificial speech entrainment. Artificial speech entrainment is defined as purposeful manipulation of the speech supplied from the remote source to increase rapport with the first user, decrease rapport with the first user, or keep rapport with the first user neutral.

In yet another embodiment, a system for detecting artificial entrainment includes a first audio signal source, a second audio signal source, and a processing system. The first audio signal source is configured to receive speech supplied from a first user and is operable, in response thereto, to supply first audio signals. The second audio signal source is configured to receive speech supplied from a remote source and is operable, in response thereto, to supply second audio signals. The processing system coupled to receive the first and second audio signals and configured to: extract a plurality of first speech-related features and a plurality of first lexical-related features from the first audio signals; extract a plurality of second speech-related features and a plurality of second lexical-related features from the second audio signals; process the first and second speech-related features to determine when the first user and the remote source begin to exhibit vocal entrainment; process the first and second lexical-related features to determine when the first user and the remote source begin to exhibit lexical entrainment; and determine, using a plurality of algorithms, metrics, and features, when the vocal entrainment and or the lexical entrainment exhibits artificial speech entrainment. Artificial speech entrainment is defined as purposeful manipulation of the speech supplied from the remote source to increase rapport with the first user, decrease rapport with the first user, or keep rapport with the first user neutral.

Furthermore, other desirable features and characteristics of the system and method for detecting artificial entrainment will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional block diagram of one embodiment of a system for detecting artificial entrainment; and
FIG. 2 depicts a process, in flowchart form, that may be implemented in the system of FIG. 2 for detecting artificial entrainment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

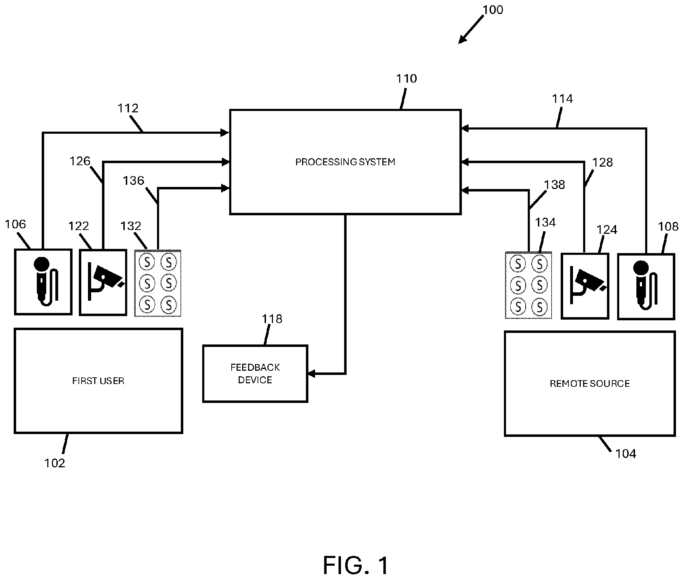

Referring to FIG. 1, a functional block diagram of a system 100 for detecting artificial entrainment is depicted. It should be noted that, for ease of depiction and description, only two communication parties - a first user 102 and a remote source 104 - are depicted in FIG. 1. It will be appreciated, however, that the system 100 can be used for remote communication between more than two parties. The first user 102, as depicted in FIG. 1, is a person. The remote source 104, however, need not be a person. Although in some embodiments the remote source 104 is another person, in other embodiments the remote source may be an automated communication system that is configured, at least in part, to carry on an automated conversation with the first user 102.

The depicted system 100, in which only two parties 102, 104 are included, includes at least a first audio signal source 106, a second audio signal source 108, and a processing system 110. The first audio signal source 106 is configured to receive speech supplied from the first user 102 and is operable, in response thereto, to supply first audio signals 112. The second audio signal source 108 is configured to receive speech supplied from the remote source 104 and is operable, in response thereto, to supply second audio signals 114. It will be appreciated that the first and second audio signal sources 106, 108 may be implemented using any one of numerous devices, now known or developed in the future, that convert vocal induced pressure variations to electrical signals. Some non-limiting examples include any one of numerous dynamic microphones, condenser microphones, and contact microphones, just to name a few.

The processing system 110 may include one or more processors and computer-readable storage devices or media encoded with programming instructions for configuring the processing system 110. The one or more processors may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The processing system 110 is coupled to receive the first and second audio signals 112, 114. The processing system 110 is configured, upon receipt of the first and second audio signals 112, 114, to extract a plurality of first speech-related features and a plurality of first lexical-related features from the first audio signals, and to extract a plurality of second speech-related features and a plurality of second lexical-related features from the second audio signals. The processing system 110 is further configured to process the first and second speech-related features to determine when the first user 102 and the remote source 104 begin to exhibit vocal entrainment, and to process the first and second lexical-related features to determine when the first user 102 and the remote source 104 begin to exhibit lexical entrainment.

Before proceeding further, as is generally known, vocal entrainment and lexical entrainment are known temporal phenomena that have been shown to be factors that can impact conversational success, including task success, rapport, and trust. Vocal and lexical entrainment can be positive, where the parties are aligning and adapting to one another to become more similar over the course of a conversation, or it can be negative, where the opposite is occurring.

Returning now to the description, to assess vocal entrainment, the first and second audio signals 112, 114 are transformed to allow for the speech-related feature extraction. The first and second speech-related features that the processing system 110 is configured to extract include, but are not limited to, extraction of pitch, speaking rate, intensity, jitter (pitch period length deviations), and shimmer (amplitude deviations between pitch period lengths). The processing system 110 may implement any one of numerous known techniques to extract the speech-related features. For example, the processing system 110 may use PRAAT or openSMILE, both of which are known computer programs for analyzing, synthesizing, and manipulating speech. PRAAT is disclosed, for example, in "PRAAT, a system for doing phonetics by computer," authored by P. Boersma, and published in Glot Int., vol. 5, 2002, and openSMILE is disclosed, for example, in "openSMILE - The Munich Versatile and Fast Open-Source Audio Feature Extractor Categories and Subject Descriptors," authored by F. Eyben, M. Wöllmer, and B. Schuller, and published in Proceedings of the 18th ACM international conference on Multimedia, 2010, pp. 1459-1462. Both of these publications are incorporated herein by reference in their entirety.

The processing system 110 may also implement any one of numerous known techniques to determine if the speech from the first user 102 and the remote source 104 exhibits positive or negative vocal entrainment. For example, the processing system 110 may implement a deep-learning approach using an unsupervised deep learning framework as disclosed in "Towards an Unsupervised Entrainment Distance in Conversational Speech using Deep Neural Networks," authored by M. Nasir, B. Baucom, S. Narayanan, and P. Georgiou, published in arXiv, 2018.. In one particular embodiment, the processing system 110 implements a Siamese Neural Network approach. This approach involves training two neural networks to learn a similarity function. In a preferred embodiment, the two neural networks are trained to learn patterns of acoustic similarity between two utterances of conversational speakers (e.g., the first user 102 and the remote source 104).

To assess lexical entrainment, the first and second audio signals 112, 114 are transformed to allow for the lexical-related feature extraction. The first and second lexical-related features that the processing system 110 is configured to extract include, but are not limited to, sparse and distributed utterance and frame-level representations, acoustic word embeddings, linguistic features (e.g., part-of-speech tags), semantic features (e.g., named entities), pragmatic features (e.g., type of speech acts), paralinguistic features (e.g., disfluencies) and temporal lexical features (e.g., pauses). The processing system 110 may implement any one of numerous known techniques to extract the lexical-related features. For example, the processing system 110 may use neural networks, word embeddings, vector space models, Markov models, or automatic speech recognition combined with linguistic rules, statistical methods, and machine learning models (e.g., support vector machine, MaxEnt, etc.).

The processing system 110 may also implement any one of numerous known techniques to determine if the speech from the first user 102 and the remote source 104 exhibits positive or negative lexical entrainment. For example, the processing system 110 may implement statistical methods that measure similarity using applications of cosine similarity, such as described in "Capturing Turn-by-Turn Lexical Similarity in Text-based Communication" by N. Liebman and D. Gergle, published in Proceedings of the 19th ACM conference on computer-supported cooperative work & social computing (pp. 553-559) (2016), or measures of topical coherence over time, such as is described in "Conceptual Recurrence Plots: Revealing Patterns in Human Discourse" by D. Angus, A. Smith, and J. Wiles, published in IEEE transactions on Visualization and Computer Graphics, 18(6), 988-997 (2011).

No matter the specific method(s) the processing system 110 implements to determines vocal entrainment and/or lexical entrainment, the processing system 110 is additionally configured to determine when the vocal entrainment and/or the lexical entrainment exhibit artificial speech entrainment. As noted above, and as used herein, artificial speech entrainment is defined as the purposeful manipulation of speech supplied from the remote source 104 to either increase rapport with the first user 102, decrease rapport with the first user 102, or keep rapport with the first user 102 neutral. The detection of artificial speech entrainment considers both in-the-moment changes and changes over time to identify patterns of potentially synthetic similarity, where the adjustment of vocal and/or lexical signals are beyond naturalness bounds. If the adjustments continuously bounce around the edge of naturalness, this may also indicate artificial speech entrainment. To make this determination, the processing system 110 implements a plurality of algorithms, metrics, and features. The algorithms, metrics, and features that are used are generally well known. Some examples include, but are not limited to, supervised machine learning using neural networks or regression, with labeled data including datasets containing natural and artificial entrainment. To fine tune detection, applications of boundary detection may be utilized to augment the machine learning models. Boundary detection algorithms are typically used to segment audio based on similarity (or dissimilarity) metrics but can be applied here as a measure to augment classification of artificial versus natural entrainment. Another option for assessing artificial versus natural entrainment would be application of edge detection techniques such as the gradient method or zero-crossing method where these techniques are combined with models for expectations of the expected number of rapid changes or zero-crossings. Expectations correspond to natural versus artificial entrainment. All algorithms for detecting artificial versus natural entrainment use varying combinations of speech-related features including mel-scaled magnitude spectrograms, timbre, pitch, chroma vectors, and rhythmic features.

In the embodiment depicted in FIG. 1, it is seen that the system 100 additionally includes at least one feedback device 118. With this embodiment, the processing system 110 is further configured, upon determining that the first user 102 and the remote source 104 begin to exhibit vocal entrainment and/or lexical entrainment, to generate commands that cause the at least one feedback device 118 to supply feedback to the first user 102 that indicates potential artificial speech entrainment between the first user 104 and the remote source 104. It will be appreciated that the at least one feedback device 118 may be implemented using any one of numerous types of devices for supplying feedback to the first user 102. For example, it may be one or more of a display device to provide visual feedback and/or a sound generator to provide audible feedback. In some embodiments, the feedback provided by the feedback device 118 may include confidence intervals regarding the degree to which the speech entrainment is artificial.

In addition to detecting artificial speech entrainment, the system 100 may also, in some embodiments, detect artificial physical entrainment and/or artificial physiological entrainment. As may be appreciated from the proceeding discussion, when the system 100 is configured to detect artificial physical entrainment and/or artificial physiological entrainment, the remote user 104 is a person who has given permission to supply various types of data.

With the above proviso in mind, to detect artificial physical entrainment, and as FIG. 1 depicts, the system 100 may, in some embodiments, include one or more first video sources 122 and one or more remote video sources 124. When included, the first video source(s) 122 is disposed near the first user 102 and is configured to supply first video data 126 to the processing system 110. The remote video source(s) 124, when included, is disposed near the remote source 104 and is configured to supply remote video data 128 to the processing system 110. It will be appreciated that the first video source(s) 122 and the remote video source(s) 124 may be implemented using any one of numerous devices, now known or developed in the future, that sense images and supply video data representative of detected video images. Some non-limiting examples include various types of image capture devices (e.g., cameras).

Regardless of the number and type of video sources 122, 124, the processing system 110 in these embodiments is additionally configured to extract a plurality of first physical features from the first video data 126, and to extract a plurality of second physical features from the remote video data 128. The first and second physical features that the processing system 110 is configured to extract include, but are not limited to, gestures, facial expressions, and body posture. The processing system 110 may implement any one of numerous known techniques in combination to extract the physical features. For example, the processing system 110 may use technology like the Microsoft Kinect or motion capture technology or it may use video data processed with computer vision and deep learning methods such as 2D and 3D convolutional neural networks to extract high-level features for object detection and activity recognition. Transformers may also be applied to model entrainment, potentially in concert with real-time transcribed speech, to identify and classify actions within the video data.

The processing system 110 may also implement any one of numerous known techniques to process the first and second physical features to determine when the first user 102 and the remote source 104 begin to exhibit physical entrainment. The techniques implemented by the processing system 110 may vary, and include, for example, using a variety of similarity metrics such as cosine similarity, Euclidean distance, or structural similarity index (SSIM) evaluated temporarily on a frame-by-frame or segment-by-segment basis.

The processing system 110, in these embodiments, is also configured to process the first and second physical features to determine when the first user 102 and the remote source 104 begin to exhibit artificial physical entrainment. Here too, the detection of artificial physical entrainment considers both in-the-moment changes and changes over time to identify patterns of potentially synthetic similarity, where the adjustment of the physical features are beyond naturalness bounds. If the adjustments continuously bounce around the edge of naturalness, this may also indicate artificial physical entrainment. To make this determination, the processing system 110 implements a plurality of various other algorithms, metrics, and features. These other algorithms, metrics, and features that are used are generally well known. Some examples include, but are not limited to, supervised machine learning using neural networks or regression, with labeled data including datasets containing natural and artificial physical entrainment. Thresholds can be based on automatically learned differences or on manually coded observations.

With this embodiment, the processing system 110 is additionally configured, upon determining that the first user 102 and the remote source 104 begin to exhibit physical entrainment, to generate commands that cause the at least one feedback device 118 to supply feedback to the first user 102 that indicates potential artificial physical entrainment between the first user 102 and the remote source 104.

For embodiments in which the system 100 is configured to detect artificial physiological entrainment, the system additionally includes a plurality of first physiological sensors 132 and a plurality of second physiological sensors 134. When included, the first physiological sensors 132 are disposed on the first user 102 and are configured to supply first physiological data 136 to the processing system 110. The second physiological sensors 134, when included, are disposed on remote source 104 and are configured to supply the second physiological data 138 to the processing system 110. It will be appreciated that the first and second physiological sensors 132, 134 may be implemented using any one of numerous devices, now known or developed in the future, that sense and supply physiological data in response to physiological activity of the first user 102 and remote source 104, respectively. Some non-limiting examples include electrocardiogram (EKG) sensors, oxygen saturation (SpO2) sensors, galvanic skin response sensors, breath-rate sensors, pupil diameter sensors, and electroencephalogram (EEG) sensors.

Regardless of the number and type of physiological sensors 132, 134, the processing system 110 in these embodiments is additionally configured to extract a plurality of first physiological features from the first physiological data 136, and to extract a plurality of second physiological features from the second physiological data 138. The first and second physiological features that the processing system 110 is configured to extract include, but are not limited to, heart rate, skin conductivity, breathing rate, and brain wave frequencies indicative of underlying brain activity (e.g., alpha-mu (8-12 Hz), theta (4-7 Hz), and beta (13-30 Hz) frequency bands). The processing system 110 may implement any one of numerous known techniques to extract the physiological features. For example, the processing system 110 may use electrocardiogram (ECG), electroencephalogram (EEG), electromyography (EMG), photoplethysmography (PPG), or respiration sensors to detect physiological features and then features would be extracted from the raw signals detected by these sensors, though the raw signals themselves can also be used as a feature and input into the rest of the processing system. Features extracted from the raw signals can include features in the time, frequency, and time-frequency domains. Time-domain features can include the mean, standard deviation, peak-to-peak interval, magnitude, and measures of signal variability. Frequency domain features can include the power spectral density, peak frequency, band power, and spectral entropy. Time-frequency domain features can include representations such as can be extracted using the Short-Time Fourier Transform and Hilbert-Huang Transform.

The processing system 110 may also implement any one of numerous known techniques to process the first and second physiological features to determine when the first user 102 and the remote source 104 begin to exhibit physiological activity entrainment. The techniques implemented by the processing system 110 may vary, and include, for example, similar approaches as described for detecting entrainment in speech signals using deep learning models on unsupervised data, applications of Siamese neural networks, or algorithms that make use of computed features from interval time series physiological data like the wavelet coherence approach, such as described in "Towards a Real-time Application to Reveal Entrainment Among People" by J. Daftari, G. Quer, and R. Rao, and published in 2012 IEEE International Conference on Communications (ICC) (pp. 6086-6090) (2012).

The processing system 110, in these embodiments, is also configured to process the first and second physiological features to determine when the first user 102 and the remote source 104 begin to exhibit artificial physiological activity entrainment. Here too, the detection of artificial physiological activity entrainment considers both in-the-moment changes and changes over time to identify patterns of potentially synthetic similarity, where the adjustment of the physiological activity are beyond naturalness bounds. If the adjustments continuously bounce around the edge of naturalness, this may also indicate artificial physiological activity entrainment. To make this determination, the processing system 110 implements a plurality of various other algorithms, metrics, and features. These other algorithms, metrics, and features that are used are generally well known. Some examples include supervised machine learning using neural networks or regression, with labeled data including datasets containing natural and artificial entrainment. Similar to algorithms for speech entrainment detection, to fine tune detection, applications of boundary detection may be utilized to augment the machine learning models. This can include simple threshold-based approaches such as applying a fixed or adaptive threshold where the signal similarities exceed or fall below a certain value or dynamic threshold-based approaches where the threshold is adjusted dynamically based on signal statistics, such as the mean and standard deviation. Also similar to assessing artificial versus natural entrainment in speech, edge detection techniques such as the gradient method or zero-crossing method can be used where models for expectations of the expected number of rapid changes or zero-crossings would correspond to natural versus artificial entrainment.

As with the previously described embodiments, with this embodiment, the processing system 110 is additionally configured, upon determining that the first user 102 and the remote source 104 begin to exhibit physiological activity entrainment, to generate commands that cause the at least one feedback device 118 to supply feedback to the first user 102 that indicates potential artificial physiological activity entrainment between the first user 102 and the remote source 104.

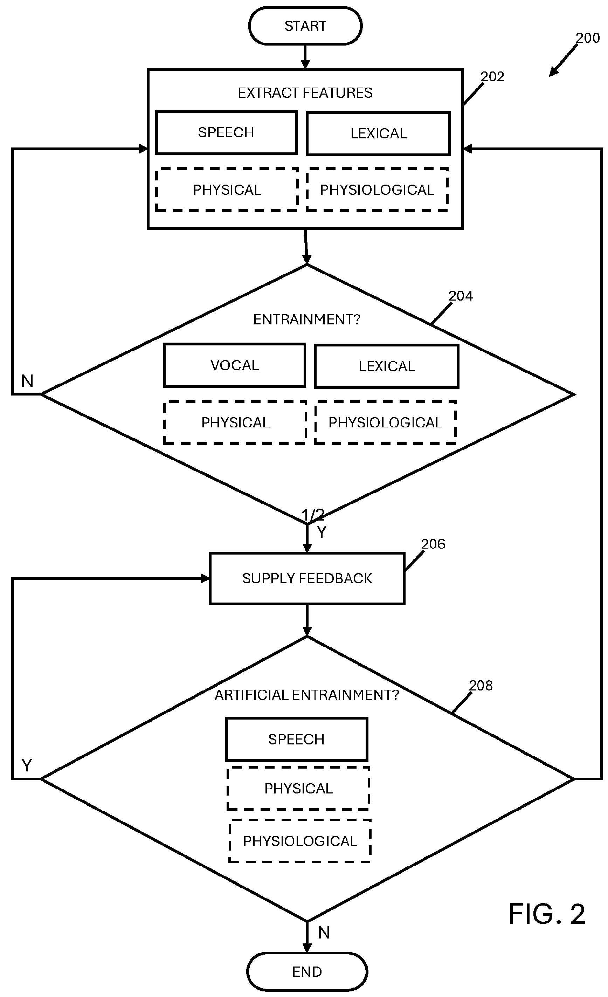

Referring now to FIG. 2, a process flowchart is depicted of one example process 200 for detecting artificial entrainment. The order of operation within the process 200 is not limited to the sequential execution as illustrated in the figure but may be performed in one or more varying orders as applicable and in accordance with the present disclosure. Moreover, as will be explained further below, some of the depicted steps may not be performed at all.

The method begins by processing, in the processing system 110, the first audio signals to extract a plurality of first speech-related features and a plurality of first lexical-related features from the first audio signals and processing, in the processing system, the second audio signals to extract a plurality of second speech-related features and a plurality of second lexical-related features from the second audio signals (202). The first and second speech-related features are processed, in the processing system, to determine when the first user and the remote source begin to exhibit vocal entrainment, and the first and second lexical-related features are processed, in the processing system 110, to determine when the first user and the remote source begin to exhibit lexical entrainment (204). Upon determining that the first user and the remote source begin to exhibit vocal entrainment and/or lexical entrainment, the processing system 110 commands at least one feedback device to supply feedback to the first user that indicates potential artificial speech entrainment between the first user and the remote source (206). A determination is then made, using a plurality of algorithms, metrics, and features implemented in the processing system, when the vocal entrainment and/or the lexical entrainment exhibits artificial speech entrainment (208). If it is determined that artificial entrainment is likely occurring, the processing system 110 may also, at least in some embodiments, command the at least one feedback device 118 to supply feedback to the first user that indicates artificial speech entrainment (206).

As noted above, and as FIG. 2 further depicts using dotted lines, the process 200 may also include, in some embodiments, extracting the plurality of first and second physical features and/or the plurality of first and second physiological features, determining when the first user and the remote source begin to exhibit physical entrainment and/or when the first user and the remote source begin to exhibit physiological activity entrainment, and determining when the physical entrainment exhibits artificial physical entrainment and/or when the physiological activity entrainment exhibits artificial physiological entrainment.

The system and method described herein can detect when speech entrainment is being utilized and synthesized in an interaction. More specifically, the system and method can detect artificial entrainment.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for detecting artificial entrainment, the system comprising a processing system that is configured to: extract a plurality of first speech-related features and a plurality of first lexical-related features from first audio signals generated in response to speech supplied from a first user; extract a plurality of second speech-related features and a plurality of second lexical-related features from second audio signals generated in response to speech supplied from a remote source;
process the first and second speech-related features to determine when the first user and the remote source begin to exhibit vocal entrainment;
process the first and second lexical-related features to determine when the first user and the remote source begin to exhibit lexical entrainment; and
determine, using a plurality of algorithms, metrics, and features, when the vocal entrainment and or the lexical entrainment exhibits artificial speech entrainment,
wherein artificial speech entrainment is purposeful manipulation of the speech supplied from the remote source to increase rapport with the first user, decrease rapport with the first user, or keep rapport with the first user neutral.

2. The system of claim 1, wherein the processing system is further configured, upon determining that the first user and the remote source begin to exhibit vocal entrainment and/or lexical entrainment, to generate commands that cause at least one feedback device to supply feedback to the first user that indicates potential artificial speech entrainment between the first user and the remote source.

3. The system of claim 1, wherein processing system is further configured to:
extract a plurality of first physical features from first video data supplied from a first video source, the first video data being representative of detected video images of the first user;
extract a plurality of second physical features from remote video data supplied from a remote video source, the remote video data being representative of detected video images of the remote source;
process the first and second physical features to determine when the first user and the remote source begin to exhibit physical entrainment; and
determine, using the plurality of algorithms, metrics, and features, when the physical entrainment exhibits artificial physical entrainment,
wherein artificial physical entrainment is purposeful manipulation of the second physical features supplied from the remote source to increase rapport with the first user, decrease rapport with the first user, or keep rapport with the first user neutral.

4. The system of claim 3, wherein the processing system is further configured, upon determining that the first user and the remote source begin to exhibit physical entrainment, to generate the commands that cause the at least one feedback device to supply feedback to the first user that indicates potential artificial physical entrainment between the first user and the remote source.

5. The system of claim 1, wherein the processing system is further configured to:
extract a plurality of first physiological features from first physiological data generated in response to physiological activity of the first user;
extract a plurality of second physiological features from second physiological data generated in response to physiological activity of the remote user;
process the first and second physiological features to determine when the first user and the remote source begin to exhibit physiological activity entrainment; and
determine, using the plurality of algorithms, metrics, and features, when the physiological activity entrainment exhibits artificial physiological entrainment,
wherein artificial physiological entrainment is purposeful manipulation of the second physiological features supplied from the remote source to increase the rapport with the first user, decrease the rapport with the first user, or keep the rapport with the first user neutral.

6. The system of claim 5, wherein the processing system is further configured, upon determining that the first user and the remote source begin to exhibit physiological activity entrainment, to generate the commands that cause the at least one feedback device to supply feedback to the first user that indicates potential artificial physiological entrainment between the first user and the remote source.

7. A method for detecting artificial entrainment, comprising the steps of:
processing, in a processing system, first audio signals to extract a plurality of first speech-related features and a plurality of first lexical-related features from the first audio signals, the first audio signals generated in response to speech supplied from a first user;
processing, in the processing system, second audio signals to extract a plurality of second speech-related features and a plurality of second lexical-related features from the second audio signals, the second audio signals generated in response to speech supplied from a remote source;
processing, in the processing system, the first and second speech-related features to determine when the first user and the remote source begin to exhibit vocal entrainment;
processing, in the processing system, the first and second lexical-related features to determine when the first user and the remote source begin to exhibit lexical entrainment; and
determining, using a plurality of algorithms, metrics, and features implemented in the processing system, when the vocal entrainment and or the lexical entrainment exhibits artificial speech entrainment,
wherein artificial speech entrainment is purposeful manipulation of the speech supplied from the remote source to increase rapport with the first user, decrease rapport with the first user, or keep rapport with the first user neutral.

8. The method of claim 7, further comprising:
upon determining that the first user and the remote source begin to exhibit vocal entrainment and/or lexical entrainment, commanding at least one feedback device to supply feedback to the first user that indicates potential artificial speech entrainment between the first user and the remote source.

9. The method of claim 7, further comprising:
processing, in the processing system, first video data supplied from a first video source to extract a plurality of first physical features from the first video data, the first video data being representative of detected video images of the first user;
processing, in the processing system, remote video data supplied from a remote video source to extract a plurality of second physical features from the remote video data, the remote video data being representative of detected video images of the remote source;
processing, in the processing system, the first and second physical features to determine when the first user and the remote source begin to exhibit physical entrainment;
determining, using the plurality of algorithms, metrics, and features implemented in the processing system, when the physical entrainment exhibits artificial physical entrainment; and
upon determining that the first user and the remote source begin to exhibit physical entrainment, commanding the at least one feedback device to supply feedback to the first user that indicates potential artificial physical entrainment between the first user and the remote source,
wherein artificial physical entrainment is purposeful manipulation of the second physical features supplied from the remote source to increase rapport with the first user, decrease rapport with the first user, or keep rapport with the first user neutral.

10. The method of claim 7, further comprising:
processing, in the processing system, first physiological data generated in response to physiological activity of the first user to extract a plurality of first physiological features from the first physiological data;
processing, in the processing system, second physiological data generated in response to physiological activity of the remote user to extract a plurality of second physiological features from the second physiological data;
processing, in the processing system, the first and second physiological features to determine when the first user and the remote source begin to exhibit physiological activity entrainment;
determining, using the plurality of algorithms, metrics, and features implemented in the processing system, when the physiological activity entrainment exhibits artificial physiological entrainment; and,
upon determining that the first user and the remote source begin to exhibit physiological activity entrainment, commanding the at least one feedback device to supply feedback to the first user that indicates potential artificial physiological entrainment between the first user and the remote source,
wherein artificial physiological entrainment is purposeful manipulation of the second physiological features supplied from the remote source to increase the rapport with the first user, decrease the rapport with the first user, or keep the rapport with the first user neutral.
